# DEMANDE DE BREVET EUROPEEN

(11) **EP 0 567 363 A1**
(43) Date de publication de la demande: **27.10.1993**
(21) Numéro de dépôt: 93400843.4
(22) Date de dépôt: 01.04.1993
(51) Int. Cl.: B60P 1/16, B66C 13/12

(54) **Alimentation en fluide pour un organe téléscopique de chargement et de déchargement d'un véhicule**

(30) Priorité: 24.04.1992 FR 9205103
(71) Demandeur: MARREL, F-42160 Andrézieux-Bouthéon (FR)
(72) Inventeur: Heritier, Albert, F-42340 Veauche (FR)
(74) Mandataire: Rinuy, Santarelli

(57) **Abrégé**

Le système comporte comme moyens pour conduite le fluide entre un premier et un deuxième embouts (22, 23) respectivement solidaires d'un premier et d'un deuxième éléments (15, 14) d'un organe télescopique :
- une conduite rigide (24) entre le premier embout (22) et un raccord (25) ;
- une conduite flexible (26) entre le raccord (25) et le deuxième embout (23) ; et
- un logement prévu sur le deuxième élément (14), logement à l'intérieur duquel se déplace le raccord (25) et se déforme la conduite flexible (26) quand les premier et deuxième éléments (15, 14) coulissent l'un par rapport à l'autre.

L'organe télescopique est par exemple une potence de chargement et de déchargement de bennes sur un véhicule.

## Description

L'invention a trait aux alimentations en fluide qui passent dans un organe télescopique du fait de la nécessité d'alimenter un récepteur situé sur l'un des éléments de l'organe, à partir de l'autre élément.

De telles alimentations sont utilisées par exemple pour alimenter un récepteur situé au bout de la flèche télescopique d'une grue de manutention montée sur un camion, ou pour alimenter un récepteur situé au bout de la potence télescopique d'un dispositif de chargement et de déchargement de bennes sur un véhicule.

On sait que pour réaliser une telle alimentation, on peut utiliser un enrouleur disposé sur l'un des éléments de l'organe télescopique, cet enrouleur coopérant avec une conduite flexible dont l'extrémité est fixée sur l'autre élément de l'organe télescopique. On connaît également une sorte de vérin qui comporte un cylindre fixé sur l'un des éléments et une tige creuse solidarisée à l'autre élément et adaptée à coulisser dans le cylindre quand l'organe télescopique s'allonge ou se contracte.

Ces systèmes présentent chacun l'inconvénient d'être onéreux, le système à enrouleur étant en outre particulièrement encombrant du fait des rayons de courbure minimum à respecter pour les conduites flexibles, tandis que le système avec une sorte de vérin est peu fiable car il se produit souvent des fuites entre le cyclindre et la tige, qui ont du mal à supporter le jeu de fonctionnement entre les éléments de l'organe télescopique, ce jeu étant généralement disproportionné par rapport à la taille du cylindre et de la tige.

L'invention vise un système d'alimentation qui soit plus économique, tout en étant fiable et capable d'être peu encombrant.

Elle propose à cet effet un système d'alimentation en fluide comportant un premier et un deuxième embouts respectivement solidaires d'un premier et d'un deuxième éléments d'un organe télescopique, caractérisé en ce qu'il comporte comme moyens pour conduire le fluide entre le premier et le deuxième embouts :
- une conduite rigide entre le premier embout et un raccord ;
- une conduite flexible entre le raccord et le deuxième embout ; et
- un logement prévu sur le deuxième élément, logement à l'intérieur duquel se déplace le raccord et se déforme la conduite flexible quand les premier et deuxième éléments coulissent l'un par rapport à l'autre.

Dans ce cas, c'est-à-dire quand l'organe télescopique s'allonge ou se contracte, le raccord se déplace par rapport au deuxième élément parce qu'il est lié au premier élément par la conduite rigide et le premier embout. Ce déplacement du raccord ne cause aucune gêne puisqu'il se produit dans le logement, que la conduite flexible est capable de se déformer en conséquence, et que ses déformations restent contenues dans le logement.

Le système d'alimentation conforme à l'invention offre des avantages de simplicité, d'économie, de fiabilité et de longévité.

Selon des caractéristiques préférées, la conduite rigide est orientée parallèlement à l'axe de coulissement des premier et deuxième éléments, et le logement est adapté à ce que la conduite rigide s'y enfonce quand l'organe télescopique se contracte et s'en retire quand il s'allonge.

Le raccord est ainsi rendu mobile dans le logement, d'une façon particulièrement simple.

Selon d'autres caractéristiques préférées, le logement comporte : un premier compartiment tubulaire et orienté parallèlement à l'axe de coulissement des premier et deuxième éléments, présentant une première et une deuxième extrémités ; et un deuxième compartiment dans lequel débouche le premier compartiment par sa deuxième extrémité, le raccord se déplaçant dans le premier compartiment, dans le sens première extrémité vers deuxième extrémité quand l'organe télescopique se contracte et vice-versa, une certaine longueur de la conduite flexible passant du premier au deuxième compartiment quand l'organe télescopique se contracte, et vice-versa.

La forme tubulaire du premier compartiment offre l'avantage de procurer de façon particulièrement simple un guidage à coulissement du raccord vis à vis du deuxième élément, tout en procurant un maintien de la conduite flexible qui permet à celle-ci d'avancer devant la conduite rigide lorsque celle-ci s'enfonce dans le premier compartiment. Un tel logement offre également des avantages sur le plan de l'encombrement, qui peut devenir particulièrement réduit.

A cet effet, le deuxième compartiment est avantageusement plat et allongé, la conduite flexible y présentant sur au moins une certaine longueur une forme en épingle à cheveux, qui s'allonge quand l'organe télescopique se contracte et vice-versa.

De préférence, afin de réduire encore l'encombrement, le deuxième compartiment est disposé parallèlement au premier compartiment, et contigu à celui-ci sur une certaine longueur, la conduite flexible présentant dans le logement un premier et un deuxième demi-tours disposés de sorte que si on longe une première portion de la conduite flexible depuis le raccord jusqu'au premier demi-tour, on s'éloigne du premier élément, que si on longe une deuxième portion de la conduite flexible depuis le premier demi-tour jusqu'au deuxième demi-tour, on se rapproche du premier élément, et que si on longe une troisième portion de la conduite flexible depuis le deuxième demi-tour jusqu'au deuxième embout, on s'éloigne du premier élément, le logement étant adapté à ce que les longueurs respectives des première, deuxième et troisième portions varient quand les premier et deuxième éléments coulissent l'un par rapport à l'autre, le deuxième demi-tour se rapprochant du premier quand l'organe télescopique s'allonge, et s'en éloignant quand l'organe télescopique se contracte.

De préférence, afin de réduire encore plus l'encombrement, notamment en vue de permettre que le deuxième élément soit celui qui coulisse intérieurement, lesdits premier et deuxième demi-tours se font en sens opposé, l'ensemble premier demi-tour, deuxième portion et deuxième demi-tour ayant une forme en S, et l'épaisseur du deuxième compartiment est sensiblement égale au diamètre extérieur de la conduite flexible.

La forme en S prise sur une certaine longueur par la conduite flexible dans le deuxième compartiment est particulièrement avantageuse, non seulement sur le plan de l'encombrement puisque l'ensemble de la conduite flexible est coplanaire, ce qui permet au deuxième compartiment d'être extra-plat, mais aussi sur le plan du comportement de la conduite flexible lorsqu'elle se déforme dans le deuxième compartiment.

On observera en effet que si les premier et deuxième demi-tours se faisaient dans le même sens, la conduite flexible aurait une intersection nécessitant que le logement ait une épaisseur deux fois plus importante. En outre, la conduite flexible aurait eu alors une forme de boucle qui aurait eu tendance à prendre une forme aussi ronde que possible, elle présenterait donc une résistance à l'allongement qui augmenterait au fur et à mesure que l'organe télescopique se contracterait. Au contraire, la forme préférée en S tend à être conservée, quel que soit l'allongement.

Selon d'autres caractéristiques préférées, le deuxième compartiment comporte au débouché du premier compartiment des moyens pour conformer le premier demi-tour, de préférence un guide extérieur sur lequel peut porter la conduite flexible quand l'organe télescopique se contracte, et un guide intérieur sur lequel peut porter la conduite flexible quand l'organe télescopique s'allonge.

Selon d'autres caractéristiques préférées, le système comporte pour former le logement un ensemble comportant un tube le long d'une portion au moins duquel est solidarisée une tôle plate, cet ensemble étant fixé sur le deuxième élément avec le tube en regard d'une première surface du deuxième élément en regard de laquelle est disposée la tôle qui regarde par un bord opposé au tube une deuxième surface du deuxième élément, le premier compartiment étant formé par l'intérieur du tube, le deuxième compartiment étant latéralement limité par le tube, les première et deuxième surfaces et la tôle.

On obtient ainsi un logement particulièrement économique et peu encombrant.

Selon d'autres caractéristiques préférées, éventuellement combinées :

- la tôle comporte une première extrémité, située du même côté que la première extrémité du premier compartiment, reliée à une portion en L dont les branches sont respectivement transversale et parallèle à la tôle, la branche parallèle étant prévue pour être appliquée contre ladite première surface du deuxième élément pour la fixation sur celui-ci dudit ensemble,
- la tôle comporte une première extrémité, située du même côté que la première extrémité du premier compartiment, et en retrait par rapport à celle-ci,
- la tôle comporte une deuxième extrémité située du même côté que la deuxième extrémité du premier compartiment, qui présente un évidement prévu pour l'accrochage dudit ensemble dans une gorge extérieure pratiquée sur un tourillon du deuxième élément prévu pour le montage d'un vérin,
- la deuxième extrémité du premier compartiment est en retrait par rapport à une deuxième extrémité de la tôle située du même côté, un guide extérieur pour conformer le premier demi-tour étant disposé entre la deuxième extrémité du premier compartiment et la deuxième extrémité de la tôle, avec une forme telle que si on le longe à partir de la deuxième extrémité du premier compartiment, on se rapproche de la deuxième extrémité de la tôle, on fait un quart de tour vers ledit bord de la tôle opposé au tube, et on se rapproche de ce bord à une certaine distance duquel on fait un demi-tour ; un prolongement de la tôle étant latéralement prévu au niveau du tube au moins jusqu'au guide extérieur,
- ledit ensemble comporte un guide intérieur pour conformer le premier demi-tour qui est formé par un rond disposé transversalement devant la deuxième extrémité du premier compartiment, au niveau de la jonction du tube et de la tôle.

Sous un deuxième aspect, l'invention vise également un organe télescopique équipé d'un système d'alimentation tel que précédemment exposé.

Dans un mode de réalisation préféré pour des raisons d'encombrement, l'organe comporte un vérin entre lesdits premier et deuxième éléments pour faire coulisser ceux-ci l'un par rapport à l'autre, le deuxième élément coulissant intérieurement dans le premier élément, ledit vérin étant disposé intérieurement dans le deuxième élément, un dit système d'alimentation y étant disposé de chaque côté dudit vérin.

Sous un troisième aspect, l'invention vise également un dispositif de chargement et de déchargement de marchandises sur un véhicule qui comporte un organe télescopique tel que précédemment exposé, et notamment une potence d'un dispositif de chargement et de déchargement de bennes, le récepteur étant par exemple un vérin pour modifier la disposition relative de ses deux branches, ledit vérin étant alimenté par l'intermédiaire dudit système d'alimentation et plus précisément par deux systèmes d'alimentation si le vérin est un vérin hydraulique à double effet.

L'exposé de l'invention sera maintenant poursuivi par la description d'un exemple de réalisation, donnée ci-après à titre illustratif et non limitatif, en référence aux dessins annexés sur lesquels :
- la figure 1 est une vue en élévation prise depuis le côté situé sur la gauche d'un camion équipé d'un dispositif de chargement et de déchargement de bennes, comportant une potence télescopique conforme à l'invention ;
- la figure 2 est une élévation de la potence du dispositif de chargement, prise suivant la coupe indiquée en II-II sur la figure 4, la potence étant en position contractée, comme sur la figure 1 ;
- la figure 3 est une vue similaire à la figure 2, la potence étant en position allongée ;
- la figure 4 est une vue en plan de l'élément avant de la branche horizontale de la potence, prise suivant la coupe indiquée en IV IV sur la figure 7 ;
- la figure 5 est une vue en élévation de l'ensemble qui sert à former le logement de la conduite flexible situé à droite sur l'élément avant de la potence, prise depuis un côté correspondant au côté gauche de l'élément avant ;
- la figure 6 est une vue de dessus de cet ensemble ; et
- les figures 7 et 8 sont les vues en coupe repérées respectivement VII-VII et VIII-VIII sur la figure 2.

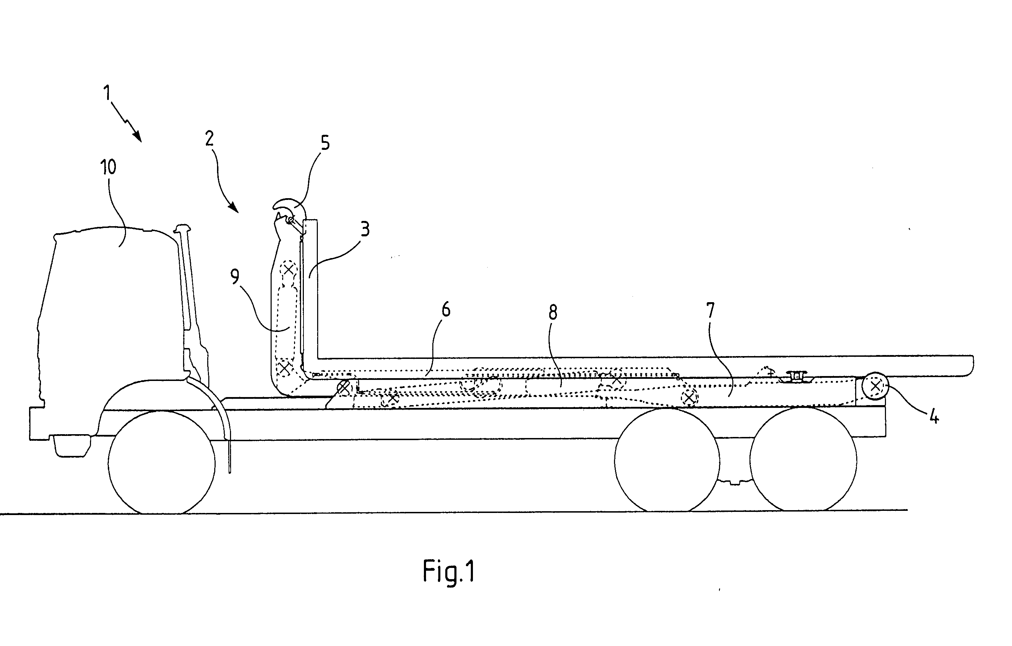

Le camion 1 montré sur la figure 1 est équipé d'un dispositif 2 de chargement et de déchargement de bennes telles que la simple plate-forme 3 illustrée, qu'une caisse ouverte sur le dessus ou qu'un conteneur, munies en partie inférieure de deux longerons adaptés à rouler sur les galets arrière 4 du dispositif 2, et sur la face avant d'une anse de préhension adaptée à coopérer avec le crochet 5 situé à l'extrémité libre d'une potence 6 dont l'arrière est articulé sur un faux-châssis 7 lui-même articulé à l'arrière du châssis du camion, le pivotement de la potence 6 et du faux-châssis 7 étant commandé par un vérin 8 de la façon décrite dans le brevet français 2.185.520 pour charger et décharger la benne 3, le pivotement de la potence 6 étant toutefois précédé lors du déchargement d'une contraction de la branche horizontale de la potence, qui est télescopique, et d'un basculement vers l'arrière du crochet 5, ce basculement étant commandé par le vérin 9. Le chargement se fait en sens inverse, c'est-à-dire qu'après que la potence 6 et le faux-châssis 7 aient basculés comme décrit dans le brevet français 2.185.520, on ramène vers l'avant le crochet 5 grâce au vérin 9 (on est alors dans la position illustrée sur la figure 1) puis on commande l'allongement de la branche horizontale de la potence 6, la branche verticale de celle-ci venant juste derrière la cabine 10 du camion en position chargée de la benne.

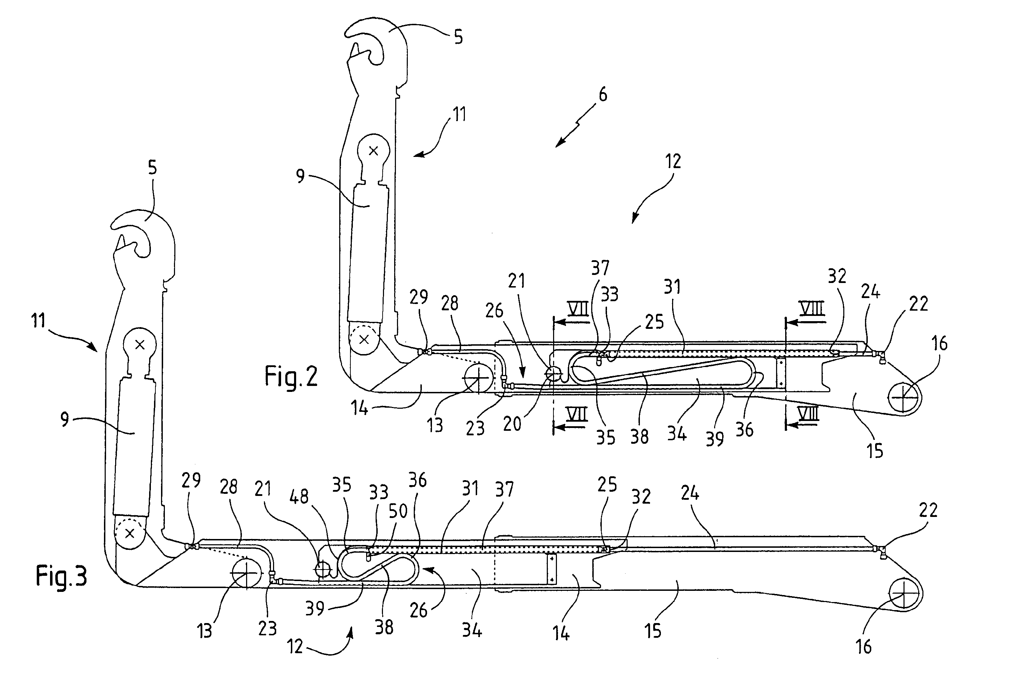

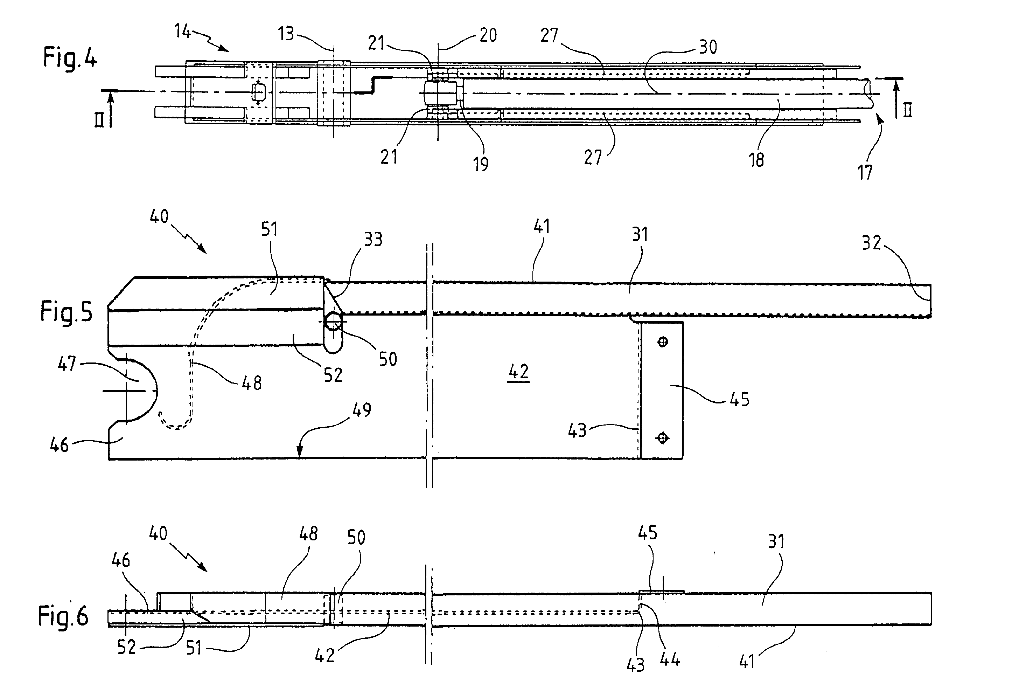

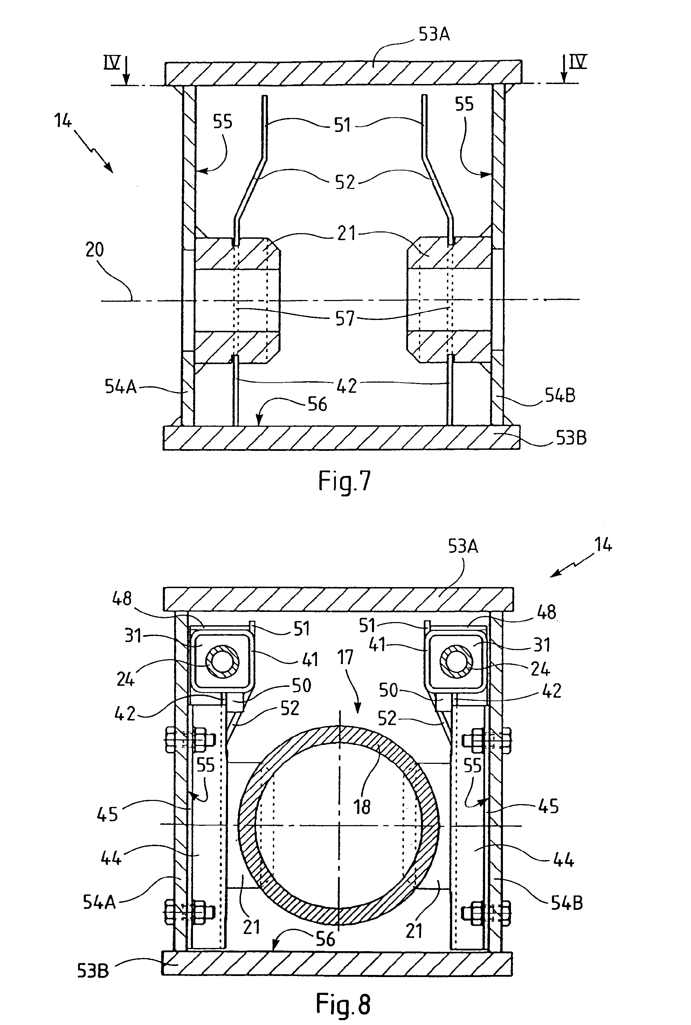

Comme on le voit sur les figures 2 et 3, la potence 6 comporte une branche verticale 11 articulée vis-à- vis de la branche horizontale 12 autourd'un axe transversal 13, les branches 11 et 12 étant à angle droit quand la tige du vérin 9 est rentrée, la branche 11 pivotant autour de l'axe 13 comme indiqué précédemment quand le vérin 9 sort sa tige. La branche horizontale 12 comporte un élément avant 14 qui coulisse intérieurement dans un élément arrière 15, la branche verticale 11 étant articulée sur l'élément 14, la potence 6 étant articulée sur le faux-châssis 7 par l'élément arrière 15, autour de l'axe transversal 16. Pour faire coulisser les éléments 14 et 15 l'un par rapport à l'autre, il est prévu un vérin 17 (voirfigure 4) dont le corps 18 est articulé sur l'élément 15 d'une façon non représentée, et la tige 19 sur l'élément 14 grâce à un pivot d'axe 20 (non représentés sur la figure 7) fixé dans des tourillons 21. Lorsque la tige 19 est rentrée dans le corps 18, comme montré sur les figures 2 et 4, la potence 6, et plus précisément sa branche horizontale 12, est contractée, et quand la tige 19 sort du corps 18, la potence s'allonge jusqu'au maximum montré sur la figure 3.

Afin d'alimenter le vérin 9 en fluide hydraulique à partir de l'élément arrière 15, la potence 6 est munie de deux systèmes d'alimentation conformes à l'invention, respectivement pour la chambre à grande section et la chambre à petite section du vérin 9, qui est à double effet. On va maintenant décrire le système qui est situé sur la droite de la potence 6, le système situé à gauche étant similaire mais symétriquement opposé.

Comme on le voit sur les figures 2 et 3, le système d'alimentation comporte un embout 22 solidaire de l'élément 15 et un embout 23 solidaire de l'élément 14, le fluide étant conduit entre les embouts 22 et 23 grâce à une conduite rigide 24 disposée entre l'embout 22 et un raccord 25, et à une conduite flexible 26 disposée entre le raccord 25 et l'embout 23. Une conduite rigide 28 est disposée entre l'embout 23 et un raccord. 29, une conduite flexible non représentée étant disposée entre le raccord 29 et l'une des chambres du vérin 9.

Lorsque les éléments 14 et 15 coulissent l'un par rapport à l'autre, le raccord 25 se déplace dans un logement 27 prévu sur l'élément 14 (voir figure 4), la conduite flexible 26 se déformant également à l'intérieur du logement 27.

La conduite rigide 24 est orientée parallèlement à l'axe de coulissement 30 (voirfigure 4) entre les éléments 14 et 15, et le logement 27 est adapté à ce que la conduite rigide 24 s'y enfonce quand l'organe télescopique se contracte et s'en retire quand il s'allonge (voir figures 2 et 3).

Le logement 27 comporte un premier compartiment tubulaire 31 orienté parallèlement à l'axe 30, présentant une première extrémité 32 et une deuxième extrémité 33, et un deuxième compartiment 34 dans lequel débouche le compartiment 31 par son extrémité 33. Quand l'organe télescopique se contracte, le raccord 25 se déplace dans le compartiment 31 dans le sens extrémité 32 vers extrémité 33, et une certaine longueur de la conduite flexible 26 passe du compartiment 31 au compartiment 34, et inversement quand l'organe télescopique s'allonge.

Le compartiment 34 est plat et allongé. Il est disposé parallèlement au compartiment 31 et contigu à celui-ci sur une certaine longueur.

La conduite flexible 26 présente dans le logement 27 deux demi-tours 35 et 36 disposés de sorte que si on longe une portion 37 de la conduite 26 entre le raccord 25 et le demi-tour 35, on s'éloigne de l'élément 15, que si on longe une portion 38 depuis le demi-tour 35 jusqu'au demi-tour 36, on se rapproche de l'élément 15, et que si on longe une portion 39 entre le demi-tour 36 et l'embout 23, on s'éloigne de l'élément 15.

On voit en comparant les figures 2 et 3 que les longueurs respectives des portions 37, 38 et 39 varient quand les éléments 14 et 15 coulissent l'un par rapport à l'autre, le demi-tour 36 se rapprochant du demi-tour 35 quand la potence 6 s'allonge, et s'en éloignant quand elle se contracte.

On observera que la portion 39, le demi-tour 36 et la portion 38 présentent une forme en épingle à cheveux qui s'allonge quand l'organe télescopique se contracte et vice-versa ; et que les demi-tours 35 et 36 se font en sens opposé, l'ensemble demi-tour 35, portion 38 et demi-tour 36 ayant une forme en S.

Le logement 27 est formé grâce à un ensemble 40 (figures 5 et 6) qui comporte un tube 41, ici à section carrée (voir figure 8), le compartiment 31 étant formé par l'intérieur du tube 41. L'ensemble 40 comporte également une tôle plate 42 solidarisée le long du tube 41, ici seulement sur une portion de celui-ci, l'extrémité 43 de la tôle 42 située du même côté que l'extrémité 32 étant en retrait par rapport à cette dernière. L'extrémité 43 est reliée à une portion en L avec respectivement une branche 44 transversale à la tôle 42 et une branche 45 qui lui est parallèle. L'extrémité 33 du compartiment 31 est en retrait par rapport à l'extrémité 46 de la tôle 42 qui est située du même côté, un évidement semi-circulaire 47 y étant prévu. Un guide extérieur 48 pour conformer le demi-tour 35 est disposé entre les extrémités 33 et 46, avec une forme telle que si on le longe à partir de l'extrémité 33, on se rapproche de l'extrémité 46, on fait un quart de tour vers le bord 49 de la tôle plate 42 qui est opposée au tube 41, on se rapproche du bord 49, et on fait un demi-tour à une certaine distance du bord 49. Un guide intérieur pour conformer le demi-tour 35 est formé par un rond 50 disposé transversalement devant l'extrémité 33, au niveau de la jonction du tube 41 et de la tôle plate 42.

Celle-ci étant solidarisée à peu près au centre du tube 41 (voir figures 6 et 8), il est prévu que la tôle 42 se prolonge à l'opposé du bord 49, entre les extrémités 33 et 46, par un pan 51 latéralement prévu du niveau du tube 41, la tôle 42 comportant un pan incliné 52 entre le pan 51 et le reste de la tôle. Les pans 51 et 52 servent à éviter qu'il n'y ait une ouverture sur le côté du guide 48. Dans l'exemple illustré les pans 51 et 52 se prolongent jusqu'à l'extrémité 46, mais pour remplir leur fonction, il suffit qu'ils aillent de l'extrémité 33 jusqu'au guide 48.

L'élément 14 de la branche horizontale 12 de la potence 6, a la forme d'un tube à section rectangulaire (voir figures 7 et 8), formé à partir de profilés d'acier plat assemblés par soudure, deux profilés horizontaux respectivement supérieurs et inférieurs 53A et 53B, et deux profilés verticaux moins épais, respectivement gauche et droite 54A et 54B. L'ensemble 40 qui vient d'être décrit, qui est prévu pour former le logement 27 situé sur le côté droit, est fixé sur l'élément 14 avec le tube 41 en regard de la surface intérieure 55 du profilé 54B, en regard de laquelle est disposée la tôle plate 42, celle-ci regardant par son bord 49 la surface intérieure 56 du profilé 53B, le compartiment 34 étant latéralement limité par le tube 41, les surfaces 55 et 56 et par la tôle 42.

La fixation de l'ensemble 40 sur l'élément 14 se fait en engageant l'évidement semi-circulaire 47 dans une gorge extérieure 57 pratiquée dans le tourillon 21 (voir figure 7), et par la branche 45 qui est appliquée contre la surface 55 et fixée, ici par des boulons, au profilé 54B.

La branche 44 forme une paroi arrière pour le logement 34. Cette paroi arrière peut être située en retrait par raport à l'extrémité 32, comme ici pour des raisons d'économie de matière, étant donné que le demi-tour 36 est en retrait par rapport à cette extrémité dans la position la plus en arrière qu'il peut prendre (figure 2).

Le logement 34 est limité à l'avant par le guide 48, l'espace situé entre la surface 56 et le demi-tour final du guide 48 étant suffisant pour le passage de la conduite flexible 26.

La distance située entre la tôle 42 et la surface 55 est légèrement supérieure au diamètre extérieur de la conduite flexible 26, étant donné que la forme qu'elle prend dans le logement 34 ne comporte aucune intersection. Ce caractère extra-plat du logement 34 est particulièrement intéressant dans l'exemple illustré, la place disponible entre le vérin 17 et les profilés 54A ou 54B étant particulièrement réduite.

Le guide extérieur 48 sert à conformer le demi-tour 35 quand la potence se contracte, c'est-à-dire quand on passe de la position de la figure 3 à celle de la figure 2, la conduite flexible 26 portant alors sur le guide 48. Lorsque la potence s'allonge (figure 2 à figure 3), c'est sur le guide intérieur 50 que porte le cas échéant la conduite 26.

En fonction des circonstances, il est possible de choisir des moyens pour conformer le demi-tour 35 au débouché du compartiment 31, qui soient différents des guides extérieur et intérieur 48 et 50.

Le système d'alimentation qui vient d'être décrit est susceptible d'équiper toute sorte d'organe télescopique, non seulement un organe similaire à la branche horizontale 12 de la potence 6 tel que la flèche d'une grue de chargement et de déchargement de marchandises sur un véhicule, mais aussi des organes télescopiques de types différents, et notamment des organes où le problème d'encombrement se pose différemment.

Ainsi, dans une variante du système d'alimentation, le compartiment 34 pourrait être remplacé par un compartiment également plat et allongé mais disposé transversalement par rapport au compartiment 31, la conduite flexible faisant un premier quart de tour à l'entrée de ce compartiment, dans lequel elle a une forme en épingle à cheveux et dont elle sort en faisant un deuxième quart de tour opposé au premier.

Dans une autre variante, la conduite rigide 24 est remplacée par une conduite disposée transversalement à l'axe de coulissement entre les deux éléments de l'organe télescopique, une rainure longitudinale étant prévue dans le logement pour permettre à la conduite rigide et au raccord de se déplacer par rapport à celui-ci.

Dans une autre variante, le logement n'est pas divisé en deux compartiments, il comporte un espace unique à l'intérieur duquel se déplace le raccord tandis que se déforme la conduite flexible lorsque les deux éléments de l'organe télescopique coulissent l'un par rapport à l'autre.

On rappelle que l'invention n'est pas limitée aux exemples décrits.

## Revendications

1. Système d'alimentation en fluide comportant un premier et un deuxième embouts (22, 23) respectivement solidaires d'un premier et d'un deuxième éléments (15, 14) d'un organe télescopique (6), caractérisé en ce qu'il comporte comme moyens pour conduire le fluide entre le premier et le deuxième embouts :
- une conduite rigide (24) entre le premier embout (22) et un raccord (25) ;
- une conduite flexible (26) entre le raccord (25) et le deuxième embout (23) ; et
- un logement (27) prévu sur le deuxième élément (14), logement à l'intérieur duquel se déplace le raccord (25) et se déforme la conduite flexible (26) quand les premier et deuxième éléments (15, 14) coulissent l'un par rapport à l'autre.

2. Système selon la revendication 1, caractérisé en ce que la conduite rigide (24) est orientée parallèlement à l'axe de coulissement (30) des premier et deuxième éléments, et en ce que le logement (27) est adapté à ce que la conduite rigide (24) s'y enfonce quand l'organe télescopique se contracte et s'en retire quand il s'allonge.

3. Système selon la revendication 2, caractérisé en ce que le logement (27) comporte : un premier compartiment (31) tubulaire et orienté parallèlement à l'axe de coulissement (30) des premier et deuxième éléments, présentant une première et une deuxième extrémités (32, 33) ; et un deuxième compartiment (34) dans lequel débouche le premier compartiment (31) par sa deuxième extrémité (33), le raccord (25) se déplaçant dans le premier compartiment (31), dans le sens première extrémité (32) vers deuxième extrémité (33) quand l'organe télescopique se contracte et vice-versa, une certaine longueur de la conduite flexible passant du premier au deuxième compartiment quand l'organe télescopique se contracte, et vice-versa.

4. Système selon la revendication 3, caractérisé en ce que le deuxième compartiment (34) est plat et allongé, la conduite flexible y présentant sur au moins une certaine longueur (38, 36, 39) une forme en épingle à cheveux, qui s'allonge quand l'organe télescopique se contracte et vice-versa.

5. Système selon la revendication 4, caractérisé en ce que le deuxième compartiment (34) est disposé parallèlement au premier compartiment (31), et contigu à celui-ci sur une certaine longueur, la conduite flexible (26) présentant dans le logement un premier et un deuxième demi-tours (35, 36) disposés de sorte que si on longe une première portion (37) de la conduite flexible depuis le raccord (25) jusqu'au premier demi-tour (35), on s'éloigne du premier élément (15), que si on longe une deuxième portion (38)de la conduite flexible depuis le premier demi-tour (35) jusqu'au deuxième demi-tour (36), on se rapproche du premier élément (15), et que si on longe une troisième portion (39) de la conduite flexible depuis le deuxième demi-tour (36) jusqu'au deuxième embout (23), on s'éloigne du premier élément (15), le logement (27) étant adapté à ce que les longueurs respectives des première, deuxième et troisième portions (37-39) varient quand les premier et deuxième éléments coulissent l'un par rapport à l'autre, le deuxième demi-tour (36) se rapprochant du premier (35) quand l'organe télescopique s'allonge, et s'en éloignant quand l'organe télescopique se contracte.

6. Système selon la revendication 5, caractérisé en ce que lesdits premier et deuxième demi-tours (35, 36) se font en sens opposé, l'ensemble premier demi-tour (35), deuxième portion (38) et deuxième demi-tour (36) ayant une forme en S, et en ce que l'épaisseur du deuxième compartiment (34) est sensiblement égale au diamètre extérieur de la conduite flexible.

7. Système selon l'une quelconque des revendications 5 ou 6, caractérisé en ce que le deuxième compartiment (34) comporte au débouché du premier compartiment (31) des moyens pour conformer le premier demi-tour.

8. Système selon la revendication 7, caractérisé en ce que les moyens pour conformer le premier demi-tour comportent un guide extérieur (48) sur lequel peut porter la conduite flexible (26) quand l'organe télescopique se contracte, et un guide intérieur (50) sur lequel peut porter la conduite flexible quand l'organe télescopique s'allonge.

9. Système selon l'une quelconque des revendications 5 à 8, caractérisé en ce qu'il comporte pour former le logement (27) un ensemble (40) comportant un tube (41) le long d'une portion au moins duquel est solidarisée une tôle plate (42), cet ensemble étant fixé sur le deuxième élément avec le tube en regard d'une première surface (55) du deuxième élément en regard de laquelle est disposée la tôle qui regarde par un bord opposé au tube une deuxième surface (56) du deuxième élément, le premier compartiment (31) étant formé par l'intérieur du tube, le deuxième compartiment étant latéralement limité par le tube, les première et deuxième surfaces et la tôle.

10. Système selon la revendication 9, caractérisé en ce que la tôle comporte une première extrémité (43), située du même côté que la première extrémité (32) du premier compartiment, reliée à une portion en L dont les branches sont respectivement transversale et parallèle (45) à la tôle, la branche parallèle étant prévue pour être appliquée contre ladite première surface (55) du deuxième élément pour la fixation sur celui-ci dudit ensemble.

11. Système selon l'une quelconque des revendications 9 ou 10, caractérisé en ce que la tôle comporte une première extrémité (43), située du même côté que la première extrémité (32) du premier compartiment, et en retrait par rapport à celle-ci.

12. Système selon l'une quelconque des revendications 9 à 11, caractérisé en ce que la tôle comporte une deuxième extrémité (46) située du même côté que la deuxième extrémité (33) du premier compartiment, qui présente un évidement (47) prévu pour l'accrochage dudit ensemble (40) dans une gorge extérieure (47) pratiquée sur un tourillon (21) du deuxième élément prévu pour le montage d'un vérin.

13. Système selon l'une quelconque des revendications 9 à 12, caractérisé en ce que la deuxième extrémité (33) du premier compartiment est en retrait par rapport à une deuxième extrémité (46) de la tôle située du même côté, un guide extérieur (48) pour conformer le premier demi-tour (35) étant disposé entre la deuxième extrémité du premier compartiment et la deuxième extrémité de la tôle, avec une forme telle que si on le longe à partir de la deuxième extrémité du premier compartiment, on se rapproche de la deuxième extrémité de la tôle, et on fait un quart de tour vers ledit bord (49) de la tôle opposé au tube, l'on se rapproche de ce bord à une certaine distance duquel on fait un demi-tour ; un prolongement de la tôle (51) étant latéralement prévu au niveau du tube au moins jusqu'au guide extérieur.

14. Système selon l'une quelconque des revendications 9 à 13, caractérisé en ce que ledit ensemble comporte un guide intérieur pour conformer le premier demi-tour (35) qui est formé par un rond (50) disposé transversalement devant la deuxième extrémité (33) du premier compartiment, au niveau de la jonction du tube (41)etde la tôle (42).

15. Organe télescopique, caractérisé en ce qu'il est équipé d'un système d'alimentation selon l'une quelconque des revendications 1 à 14.

16. Organe selon la revendication 15, caractérisé en ce qu'il comporte un vérin (17) entre lesdits premier et deuxième éléments (15, 14) pour faire coulisser ceux-ci l'un par rapport à l'autre, le deuxième élément (14) coulissant intérieurement dans le premier élément (15), ledit vérin (17) étant disposé intérieurement dans le deuxième élément (14), un dit système d'alimentation y étant disposé de chaque côté dudit vérin.

17. Dispositif de chargement et de déchargement de marchandises sur un véhicule, caractérisé en ce qu'il comporte un organe télescopique (6) selon l'une quelconque des revendications 15 ou 16.

18. Dispositif selon la revendication 17, caractérisé en ce que ledit organe télescopique est une potence (6) d'un dispositif (2) de chargement et de déchargement de bennes (3).

19. Dispositif selon la revendication 18, caractérisé en ce que la potence (6) comporte un vérin (9) pour modifier la disposition relative de ses deux branches (11, 12), ledit vérin (9) étant alimenté par l'intermédiaire dudit système d'alimentation.

20. Dispositif selon la revendication 19, caractérisé en ce que ledit vérin est un vérin hydraulique (9) à double effet alimenté grâce à deux dits systèmes d'alimentation.
